# EUROPEAN PATENT SPECIFICATION

(11) **EP 2 301 635 B1**
(45) Date of publication and mention of the grant of the patent: **20.03.2013**
(21) Application number: 09290741.9
(22) Date of filing: 29.09.2009
(51) Int. Cl.: H04L 12/26, H04L 29/08, A63F 13/12, H04L 29/06

(54) **Method of network delay equalization**
Verfahren zur Netzlaufzeitentzerrung
Procédé d'égalisation du retard dans un réseau

(43) Date of publication of application: 30.03.2011
(73) Proprietor: Alcatel Lucent, 75007 Paris (FR)
(72) Inventor: Batteram, Harold, 1241 LJ Kortenhoef (NL); Feather, Frank, Enlishtown NJ07726 (US)
(74) Representative: Wetzel, Emmanuelle

(56) References cited:
- EP-A1- 1 768 351
- US-A1- 2002 107 040

## Description

The present invention relates to a method of network delay equalization for equalizing a transfer of data packets associated with at least one service provided by at least one application server to at least two application clients. The present invention relates further to a corresponding latency equalizer as well as a corresponding latency controller.

Certain classes of client-server network applications such as highly interactive multiplayer network games, e-commerce on-line auctions, on-line cooperative music, and telepresence applications can be very sensitive to differences in network delay. Client-server network applications are services provided by at least two network nodes. The differences in network delay can result in unfair advantages between participants. For example in online gaming the difference in latency significantly impacts the playability of the game. While various existing techniques such as action prediction and dead reckoning are useful to compensate for absolute delay, the delay variation between various clients in a multiparty client server application also needs to be constrained within acceptable bounds. Network QoS (QoS = Quality of Service) can lower latency, but ultimately some clients will have much better latency than others, which results in unfair advantages between participants and the participants are not equally treated by the client-server application.

Document EP 1 768 351 A1 discloses a system for reducing latency disparity between a plurality of connections accessing a game server, which is an application server, through a network and through a provider edge device. The system comprises further end user devices and a network management system. Each end user device has a respective connection to the provider edge device. The provider edge device provides access to the network for the server, wherein the provider edge device is implemented within the communication path nearby the server and thereby far from the user end devices. The system comprises a network management system, wherein the network management system is not positioned in the communication path between the server and the end user device. Inherent latency (time delay) is determined by the network management system, but measured by the provider edge device.

The object of the present invention is to provide an improved method of network delay equalization, an improved latency controller as well as an improved latency equalizer for equalizing a transfer of data packets.

The object of the present invention is achieved by a method of network delay equalization for equalizing a transfer of data packets according to claim 1. The object of the present invention also is achieved by a latency controller for equalizing a transfer of data packets according to claim 14.

The object of the present invention is further achieved by a latency equalizer for equalizing a transfer of data packets according to claim 15.

The present invention provides latency equalization between network nodes providing at least one service in a generic way which is transparent to the at least one service. Network nodes can provide and/or execute application clients, that interact with an application server provided and/or executed by another or the same network node, preferably via a communication network. The at least one service is preferably a client-server application. Due to propagation delay caused by geographical distances in the location of application clients and differences in the network path, route and/or network equipment, latency differences between messages sent from the application clients as well as sent form the application server can occur. This invention provides a solution to equalize these differences in a way that can be efficiently and transparently applied without modification to the application server and/or the application clients, i.e. network nodes providing the application server and/or the application clients.

Embodiments according to the present invention will add a respective additional time delay to low latency application clients so to have similar or equalized latency to that of other application clients. It is possible, that a respective additional time delay is zero value for at least one the application clients client. The wording clients may be also used for network nodes of a communication network which are part of the at least one service provided by the at least two network nodes. As said, the at least one service can be a client-server application, wherein nodes, i.e. network nodes, providing a respective application client are also called clients and nodes, i.e. network nodes, providing a respective application server are also called servers. Furthermore, in the following the wording client-server service can also be understood, more general, as service provided by applications provided by, i.e. executed on, at least two network nodes, wherein each of the applications can act as application client and/or application server. It is also possible that the wording host in place of the wording server is used; and that the wording participant in place of the wording client is used.

The present invention provides an equalized network delay, i.e. latency, between, for instance, multiparty client-server applications or services in an application transparent manner while minimizing processing and memory overhead at the network nodes providing a server application. It is possible that the at least one service is provided by a plurality of network nodes. In particular, embodiments of the present invention also efficiently support large scale, applications and/or services which involve hundreds, thousands, tens of thousands or even millions of network nodes. Such applications and/or services are for instance so-called massive multiplayer online games.

Embodiments according to the present invention provide improvements regarding latency differences for client-server applications and/or services sensitive to network delay differences. In particular, commercial applications such as online gaming, e-commerce, cooperative music, on-line voting, telepresence, on-line auctions, on-line stock trading and others can benefit from the present invention.

The present invention can also provide an LEC (LEC = latency equalizer and/or controller). The LEC can be an application which provides the functionality of a latency controller and/or a latency equalizer. A LEC can also be a network node or part of a network node of a communication network. In the following the wording LEC acting as latency equalizer and/or acting as latency controller may be used equivalently for latency equalizer and/or latency controller, respectively. With respect to the wording LEC it is understood in general, since the LEC can a be device or a computer software product executed on a network node, like a personal computer, server, gateway, router, etc.. Furthermore, a LEC may be and/or may act only as a latency equalizer, but in this case there must be a further LEC which is and/or acts as a latency controller. Similar, a LEC may be and/or may act only as a latency controller, but in this case there must be a further LEC which is and/or acts as a latency equalizer.

A latency controller may be located at or nearby - from a network perspective - the application server. The latency controller is associated with one or more application servers. The latency controller is positioned in the communication path between an application client and a respective application server. The latency controller can be integrated within existing network equipment. The latency controller is connected to the same LAN (LAN = local area network) as the application server. Its location in the network must be such that the latency of data packets traveling from the application client to the application server or the latency controller is approximately equal. A purpose of the latency controller is to measure time delays between data packets sent from the client application and received by the application server. This measurement can be repeated periodically to dynamically adapt to changes. Furthermore, the latency controller calculates respective additional time delays that each client should add in order to achieve the desired latency equalization values. This calculation can be repeated periodically to dynamically adapt to changes in associated application clients and time measurements. Furthermore, the calculation is subject to a constraint that each respective time sum of the respective additional time delay and the respective time delay is of equal size, however since the calculation is based on a measurement, which may comprise e.g. measurement errors; the constraint may only be approximately fulfilled. The latency controller informs a latency equalizer with which the application client, i.e. the service, is associated about the respective additional time delay to be applied to data packets originating from the application client. This information can be repeated periodically to dynamically adapt to changes. Furthermore, the latency controller can publish address information of associated application servers to a well known latency equalizer service gateway so that associated latency equalizers can obtain this address information. Thereby, the latency equalizer service gateway can assist LECs, a latency controller and/or latency equalizers.

Further, the latency equalizer service gateway may provide a registrar functionality to assist and/or improve latency equalization. The latency equalizer service gateway is not dependent on a specific location in the communication network. It has a well known address that can be pre-configured in participating LECs, latency controllers and/latency equalizers, or obtained through a DHCP service (DHCP = dynamic host configuration protocol) and/or through DNS (DNS = Domain Name System). Each latency controller may publish internet addresses and/or IP addresses (IP = Internet protocol) of the application servers under its control or a generic IP mask that represents a group of application servers under its control to the latency equalizer service gateway. The latency equalizer service gateway can facilitate the connection between registered application serves, and LECs.

The latency equalizer is preferably located at or nearby - from a network perspective - to its respective application client. The latency equalizer shall provide a queue to schedule, queue and/or buffer and delay data packets destined to a respective and particular application server by a time amount, i.e. the respective additional time delay, specified by the associated latency controller. The latency equalizer is implemented anywhere within the communication path nearby its associated network node which provides and/or executes the application client. The closer the latency equalizer is to the application client the better, although on the client computer, i.e. a respective network node, itself may make it vulnerable to cheating, e.g. application users, like players, may hack into the equalizer.

Embodiments according to the present invention can be transparently applied to a wide class of existing and future applications and/or services because they do not require modifications to the applications, because of the LEC which is a software or hardware means providing a functionality of latency equalization and/or a functionality of a latency controller, can be a single entity or device comprising a latency equalizer and a latency controller, or can be two separated entities, wherein one is providing the latency equalizer functionality and another one is providing the latency controller functionality, and/or visa-versa.

The latency equalizer can be implemented anywhere within a communication link nearby a network node providing a respective application client, for example at a network node where the application client is running, within a residential gateway device, within a DSLAM device (DSLAM = digital subscriber line access multiplier) and/or as a stand-alone device inserted in the network connection path. The latency controller can be implemented near a network node providing an application server, for instance as a stand-alone device. The latency controller is connected to the same local network as the application server. The latency controller can be integrated within a network equipment such as an edge router, and/or within a network node providing an application server, which can be advantageous if the network node providing an application server also provides a receptive application client. However, it is also possible that the latency controller is provided by the application server and the latency equalizer by a respective application client.

Latency equalizers in accordance with the present invention can intercept and process IP packets, i.e. data packets associated with the service, sent from application clients, wherein the process overhead is comparable to standard IP routers and can be implemented very efficiently.

Preferably, the latency controller does not need to intercept client-server application traffic and hence does not add any overhead.

Most known latency equalization solutions are server-based in that the application server will buffer to delay responses to the application clients, but this incurs a lot of overhead for the server. Furthermore, application client-based mechanisms, such as delay buffering, are less commonly used and susceptible to cheating. There are also network-based equalization techniques known, but these techniques require cooperation with service providers. However, embodiments of the present invention can provide the following advantages - as partly said as above - over current techniques in that:

Embodiments according to the present invention can transparently and dynamically equalizes latency between multiple clients participating in a client-server session and/or services, which can be provided by network nodes, and do not require modifications to existing client nor server applications and application clients nor application servers, respectively.

Further, embodiments according to the present invention may not impose an overhead or a delay on the application server because it does not need to intercept client-server application traffic, i.e. the transfer of data packets associated with the respective service.

Embodiments according to the present invention can also be highly scalable because the main work load may be distributed among latency equalizers, which have to queue the data packets associated with the service.

Embodiments according to the present invention can periodically measure the respective time delay and adjust the respective additional time delay, which requires very little communication between the latency controller and the latency equalizer.

Embodiments according to the present invention can be independent from modifications to existing network infrastructures although they can benefit from integrated implementation in edge devices, e.g. DSLAM, residential gateway, edge router, and/or DSL Modem or router (DSL = Digital Subscriber Line). It is possible, that a latency equalizer programming interface is provided by means of which LECs can be maintained and/or configured.

Furthermore, embodiments according to the present invention the position of the latency controller device can be flexible and can be positioned at various points near the respective network node providing an application server, or can be integrated within existing equipment, which allows for flexibility in the deployment strategy.

Embodiments according to the present invention can be implemented in hardware devices, software only, or a combination of hardware and software as described in the above.

It is further possible in embodiments according to the present invention that the position of the latency equalizer is flexible and, thereby can be positioned at various points in the communication a link between a network node providing an application client and a network node providing an application server, which further allows for flexibility in the deployment strategy.

Embodiments according to the present invention can provide latency equalizer which are less vulnerable to hacking by cheaters because they can be placed external to the computer or a network node on which the application client is executed, for example in a residential gateway, a DSL modem and/or router, an edge router or a DSLAM. In case that a LEC is integrate in a residential gateway or DSL modem and/or router an improved latency equalization can be achieved in contrast to the case when LEC is integrated in an edge router or a DSLAM. But, when the LEC is integrate in a residential gateway, DSL modem and/or router the latency equalization can be cheated by owner of the residential gateway, the DSL modem and/or router, respectively reducing or removing the respective additional time delay for gaining an advantage over other users of the application service.

Further, embodiments according to the present invention provide the latency equalizer be easily combined with QoS mechanisms for preferential treatment of real-time sensitive packets in subsequent network nodes of the communication network.

Further advantages are achieved by embodiments of the invention indicated by the dependent claims.

According to a preferred embodiment of the invention data packets associated with the at least one service are transferred between the application server and at least one of the application clients via a communication network, wherein the latency equalizer interconnects its associated application client with the communication network.

According to a preferred embodiment of the invention the application server and at least one of the application clients are instantiated on the same network node. Data packets associated with the at least one service between the application server and said application client are transferred.

Further according to a preferred embodiment of the invention the data packets associated with the at least one service between the application server and said application client are transferred by means of inter process communication.

According to a preferred embodiment of the invention for measuring the respective time delay the latency equalizer monitors the transfer of the data packets associated with the at least one service between said application server and the respective application clients. The respective latency equalizer and/or the respective application client assign a timestamp to one or more data packets prior sending it to said application server. Further, latency controller determines by means of said one or more timestamps associated with the data packets the respective time delays.

According to a preferred embodiment of the invention for the measuring the respective time delay latency controller issues a timestamp request message to one or more of said latency equalizers associated with the application clients. The one or more of said latency equalizers respond to the timestamp request message by means of sending a respective reply message to the latency controller. The respective reply message comprises a timestamp indicating a local clock value of the latency equalizer associated with the reception of the timestamp request message. Further, the latency controller determines by means of said one or more timestamps received with said respective reply messages the respective time delay associated with the transfer of the data packet.

Preferably, the latency controller issues a timestamp request to each associated latency equalizer and registers its local clock value, i.e. timestamp, at which the request is send. The latency equalizer can respond to the request with a timestamp indicating its local clock value at the time the request was received. For an accurate latency measurement, a timestamp response data packet, a data packet to measure the respective time delay, sent by the latency equalizer should preferably have the same average size and further preferably QoS parameters as application data packets, i.e. data packets associated with the at least one service, exchanged between the application client and the application server. The latency equalizer can derive an average data packet size and preferably QoS information by inspecting IP packets sent by the application client. When the latency controller receives the reply from the latency equalizer, it can calculate the round trip transmission delay, which is the difference between the registered time send and received, and also a clock offset value or time difference between its own clock value and the latency equalizer clock that sent a response. This offset is the difference between the registered send time + transmission time / 2 and the timestamp value noted in a response message, i.e. the reply message. The latency controller can register the clock offset value of each associated latency equalizer. These time calculations can be repeated several times to compute a reliable average value. Once the clock offset value between a latency equalizer and the latency controller has been determined, subsequent periodic messages from latency equalizer only need to specify its local timestamp, from which the latency controller can derive the latency value, i.e. a respective additional time delay. When the average latency value has changed over time, the latency controller updates the latency equalizer by specifying a new respective additional time delay.

According to a preferred embodiment of the invention for the measuring the respective time delay, the latency controller issues a reply request message to one or more of said latency equalizers associated with the application clients. The one or more of said latency equalizers respond to the reply request message by means of sending a respective reply message to the latency controller. Further, the latency controller determines by means of a local clock value associated with the issuing of the reply request message and a local clock value associated with a reception of the respective reply message the respective time delay associated with the transfer of the data packet. The local clock values are associated with the latency controller.

According to a preferred embodiment of the invention the latency controller determines a maximum time delay from the measured respective time delays. Further, the latency controller assigns for each of the application clients as calculated respective additional time delay a difference of the maximum time delay and the respective time delay associated with the respective application client.

Using this method, the latency controller can measure the transmission times between all associated latency equalizers and registers the longest time delay value. The longest time delay value may be restricted by a configurable upper bound value where each application could specify its own upper bound value. Latency equalizers that exceed this upper bound value can be informed and can be excluded from participation to the at least one service, that is, the application client or clients associated with the equalizer will be excluded. The latency controller can inform each associated latency equalizer about an extra time delay they need to add to data packets directed to the associated latency controller. Each latency equalizer will then apply this extra time delay by buffering data packets in a queue it receives from the application client and sending the data packets from the queue when the extra time delay has expired. The latency equalizer can also be configured to delay data packets received form the application server before forwarding them to the application client. Depending on a specific requirement of the application, i.e. the at least one service, latency equalization can be applied in either communication direction or both directions if needed. The direction for which the latency must be equalized can be specified as part of an application server to latency controller registration procedure.

Furthermore, it is also possible to achieve the above described time synchronization between the latency controller and latency equalizer by other methods. For instance, the time synchronization between the latency controller and latency equalizer can be achieved using a Network Time Protocol (NTP).

According to a preferred embodiment of the invention the latency controller performs the step of measuring two or more times. The latency controller calculates an averaged respective time delay as the respective time delay based on the two or more times measured respective time delays. Further, the latency controller calculates for the application clients a new respective additional time delay based on the averaged respective time delay.

Furthermore, according to a preferred embodiment of the invention the latency controller performs the step of measuring two or more times, preferably periodically every 10 seconds to 1 minute.

According to a preferred embodiment of the invention the latency controller performs the step of measuring periodically, preferably every 10 seconds to 1 minute. Further the latency controller calculates periodically a new respective additional time delay as the respective additional time delay based on the new respective time delay.

Preferably, the latency controller sends the new respective additional time delays each to the latency equalizer and/or latency controller associated with the at least one service for replacement of the respective additional time delay. It is possible that the latency controller sends the new respective additional time delays via the communication network.

According to a preferred embodiment of the invention a latency equalizer service gateway assigns said latency controller to said application server and said latency equalizers to said application clients.

Further, according to a preferred embodiment of the invention the latency equalizer service gateway provides, a latency equalizer application programming interface enabling the assigning of said latency controller and said latency equalizer. The latency equalizer application programming interface comprises an authentication functionality for accessing the at least one service, an authorization functionality for accessing the latency equalizer service gateway, an accounting functionality for usage of the at least one service, a session setup and termination functionality for session initiation and termination, respectively of the at least one service, and/or a controlling functionality of the at least one service. Furthermore, a data base holds data related with the at least one services and data related with said latency equalizer and/or said latency controller. Preferably, the data base is accessible or provided by the latency equalizer service gateway. It is possible that data base is accessible by means of the latency equalizer application programming interface.

Preferably, the LEQ API (LEQ = latency equalizer, API = application programming interface) may be offered to authorized third parties, e.g. for maintaining and/or controlling the service. The LEQ API may offer and/or provide one or more functions selected from the following set of functions: authentication, authorization, accounting, session setup, registrar, adding and/or removing participants, and/or session termination.

Authentication provides to authenticate a third party accessing the service provided through the LEQ service gateway. Authorization provides assigning to different third parties different permission to access LEQ service gateway. Accounting enables to bill third party users e.g. for the use of services or the LEQ service gateway. By means of the session setup function a third party service may provide a list of participants, i.e. the application clients, e.g. their associated IP addresses and port numbers, and the address of the session or game host, i.e. the application server. Furthermore, the function of adding and/or removing participants allows a new participant to be added and/or removed, respectively to the session. More functions are possible such as obtaining a list of all sessions, participants etc.. The LEQ API can be realized in a variety of ways, for example using various existing web services techniques, SOAP interfaces, using the SIP, a dedicated protocol and/or other existing Internet technologies.

Furthermore, the LEQ API may provide that LECs are updated regarding IP address of servers by the third party. It is possible that LECs are preconfigured such that the LECs comprise information about IP address of servers. Furthermore, it is possible that IP addresses of application servers are automatically updated. In such a case new application server can inform about its service, its IP address and/or its port one or more LECs by means of the LEQ API. Such might be desirable, in cases where users and/or participants of a service, like games, provided by the at least two network nodes are unaware which console and/or network node acts as the server.

The LEQ API may also provide separation between operator-controlled or third party-controlled services and/or devices with a third party API to expose the latency equalization service to customers, i.e. subscribers of the service.

Furthermore, the LEQ service gateway can inform the LECs about, preferably a list of, application server addresses by means of the registrar functionality of the LEQ API. However, it is also possible, that the latency controller informs the LECs about the application server addresses.

In particular, it is possible that any LEC can act as latency controller and/or latency equalizer, depending on the assigned role in the game or application session, i.e. service. Then to the LEC assigned role can be dynamically altered. It is possible, that the role is altered by means of the LEQ API. The role can be altered by means of an application client and/or application server associated with the service, and/or by means of a third party associated with the service via the LEQ service gateway. Hence, at any time there can be a large number of simultaneous sessions where each session can have a highly variable number of participants, like game sessions.

A time delay for data packets exchanged between the latency controller and its associated application server is at least five times smaller than the respective time delay associated with the transfer of the data packet with the respective latency equalizer. A time delay for data packets exchanged between the latency equalizer its associated application client is at least five times smaller than the respective time delay associated with the transfer of the data packet with the respective latency controller. Preferably, the time delay for data packets exchanged between the latency controller and its associated application server is negligible small for the measurement of the respective time delay and/or the calculation of the respective additional time delay, respectively. Correspondingly, it is possible, that the time delay for data packets exchanged between the latency equalizer and its associated application client is negligible small for the measurement of the respective time delay and/or the calculation of the respective additional time delay, respectively. In other words, the access delay may be minimal compared to the network delay, i.e., the delay between the application client and latency equalizer, along with the delay between the application server and latency controller may be minimal, i.e., less than five times the network delay between the latency controller and latency equalizer.

Preferably, an application client can be removed from the session, i.e. the at least one service, using a time-out mechanism. After a configurable period of inactivity, the latency equalizer can notify the latency controller that the application client can be removed from the session. Should the application client become active again, it can simply be added to the session again.

Adding and removing application clients to a session may impact the queue delay value, i.e. the respective additional time delay, for all other session participants. The latency controller will re-evaluate the required queue delay for each client after each update in a session table and inform latency equalizers if needed.

Furthermore, it is possible, that operation of the latency equalizer can be combined with QoS mechanisms. The latency equalizer can set specific QoS parameters to client-server session data packets when forwarding so that subsequent network devices, e.g. network nodes, LECs, and/or devices providing a LEC functionality, apply preferential treatment and minimize time delay variations caused by congestion.

It is possible, that the latency controller maintains a table of one or more, preferably all, network nodes and/or application clients providing the at least one service. For each of the one or more network nodes the table holds the additional time delay, wherein preferably additional time delay is a numeric value, which the latency controller associated with the one or more network nodes and/or application clients needs to apply to achieve the desired latency equalization. Preferably, the table comprises one or more data elements selected from the group of application client identification number, address of the respective latency equalizer, session or service identification number, and the respective additional time delay. The respective additional time delay corresponds to a buffer time of the data packets associated with the at least one service in a queue of the latency equalizer. Preferably, each latency equalizer comprises a queue for buffering data packets for a time period. It is possible that the latency equalizer and/or the latency controller a database for storing or holding the table.

As previously described, the latency controller can be a device that measures network delay time between data packets send by an application client and received by the application server. It can be active, in which case the latency controller will exchange data packets and/or messages to measure latency, or passive, in which it will only monitor the application flow, i.e. the data packets associated with the at least one service exchanged, between, preferably all, application clients and the respective application server.

Preferably, in an active latency controller, the respective delay time is measured by periodically exchanging messages and/or data packets between the latency controller and the respective latency equalizer. Because the latency controller is located close to the application server and the latency equalizer is located close to the respective network node providing the application client, the measured time delay is a close approximation of the latency between the application client and the application server. The latency value can be calculated using a communication protocol between the latency controller and each associated latency equalizer. When a client-server session, i.e. at least one service, is started from a client application, the latency equalizer can derive the associated latency controller address from the application server destination address and preferably port number in the IP packet that is passed through the latency equalizer. The latency equalizer sends a message to the latency controller that a client-server session has been established.

Preferably, a passive latency controller is similar to an active latency controller except it merely monitors the application flows, i.e. the data packets associated with the at least one service exchanged, and calculates latency based on timestamps and arrival times of data packets. For a passive monitor the latency controller may still have to synchronize with the respective latency equalizers. However, in case that the latency controller is a passive latency controller, the latency equalizer is an active latency equalizer for performing actively latency equalization.

These as well as further features and advantages of the invention will be better appreciated by reading the following detailed description of presently preferred exemplary embodiments taken with the accompanying drawings of:
- Figure 1: shows a preferred embodiment of the present invention.
- Figure 2: shows a node of the communication network.
- Figure 3: shows an exemplary message sequence diagram.

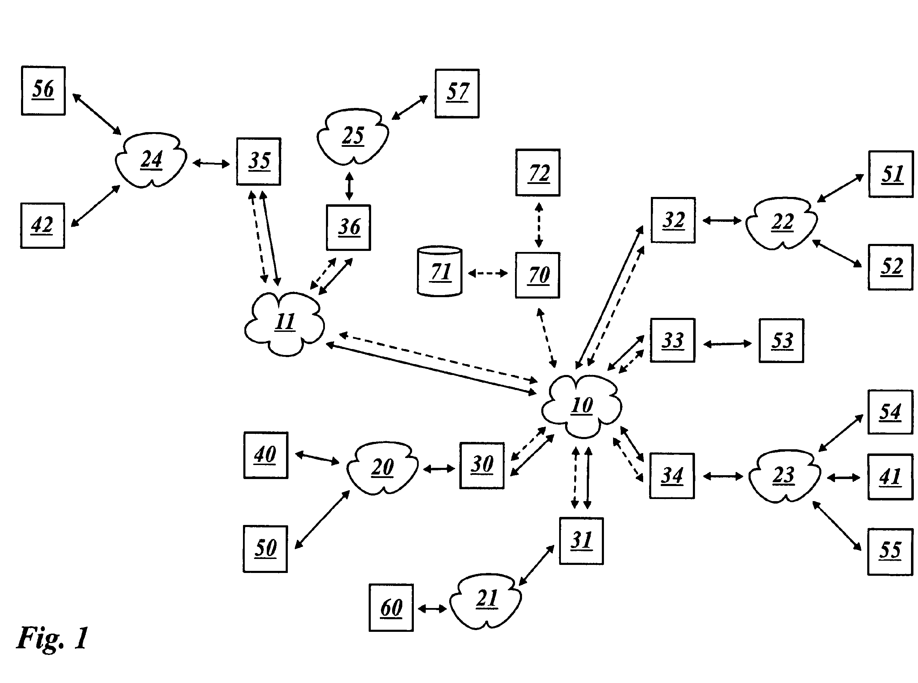

Figure 1 shows a preferred embodiment of the present invention. Figure 1 shows a network comprising a first communication network 10 associated with a first domain of the network and a second communication network 11 associated with a second domain. Four LANs 20, 21, 22, and 23 (LAN = local area networks) are associated with the first communication network 10 and two LANs 24 and 25 are associated with the second communication network 11. The first domain comprises five LECs 30, 31, 32, 33 and 34. As previously described LEC can be a software or hardware means which provides the functionality of a latency controller and/or a latency equalizer. In the presently preferred embodiment, the LEC is a network node of the communication network 10 or 11. In the following the wording LEC acting as latency equalizer and/or acting as latency controller may be used equivalently for latency equalizer and/or latency controller, respectively. However, it is also possible that the LEC is a device of a network node or a computer program product executed on a network node. The second domain comprises two LECs 35 and 36. The LECs 30, 31, 32 and 34 of the first domain interconnect the first communication network 10 with the LANs 20, 21, 22, and 23, respectively. The LECs 35 and 36 of the second domain interconnect the second communication network 11 with the LANs 24, and 25, respectively. The first domain comprises nine network nodes 40, 50, 60, 51, 52, 53, 54, 41, and 55. The second domain comprises three network nodes 42, 56, and 57. The network nodes 40 and 50 are connected to the LAN 20. The network node 60 is to the LAN 21. The network nodes 51 and 52 are connected to the LAN 22. The network node 53 of is interconnected with the first communication network 10 by means of the LEC 33. The network nodes 54, 41, and 55 are connected to the LAN 23. The network nodes 42 and 56 are connected to the LAN 24. The network node 57 is connected to the LAN 25. The network nodes 40, 51, 53, and 54 provide a first application session as service. The network node 40 acts as application server₁, whereas the network nodes 51, 53, and 54 act as application client₁, application client₃, and application client₄, respectively of the first application session. The wording "network node acts as application client and/or application server, respectively" means the network node executes and/or provides a application client and/or application server, respectively.

The network nodes 42, 50, 56, and 57 provide a second application session as service. The network node 42 acts as application server₂, whereas the network nodes 50, 56, and 57 act as application client₇, application client₁₀, and application client₉, respectively of the second application session. The network nodes 60 and 52 provide a third application session as service. The network node 60 acts as application server₃ and as application client₆, whereas the network node 52 acts as application client₂ of the third application session. The network nodes 41, 55, and 56 provide a fourth application session as service. The network node 41 acts as application server₄, whereas the network nodes 55 and 56 act as application client₅ and application client₈, respectively of the fourth application session. The LEC 30 acts as latency controller of the first application session and acts as latency equalizer of the second application session. The LEC 31 acts as latency controller and latency equalizer of the third application session. The LEC 32 acts as latency equalizer of the first application session and of the third application session. The LEC 33 acts as latency equalizer of the first application session. The LEC 34 acts as latency controller and latency equalizer of the fourth application session and acts as latency equalizer of the first application session. The LEC 35 acts as latency controller and latency equalizer of the second application session and acts as latency equalizer of the fourth application session. The LEC 36 acts as latency equalizer of the second application session. Preferably, one or more, or each of the four application sessions are interactive client-server sessions.

In particular, each data packet associated with one or more of the application sessions, i.e. services, passes through at least one of the LECs associated with the respective service, wherein the at least one LEC acts as latency controller. Furthermore, data packets originating form or directed to a network node which is interconnected with the communication network by means of a LEC pass though this LEC. Thereby, it is possible that the LEC can always monitor and/or manipulate the respective data packets, perform a DPI (DPI = deep packet inspection) of the respective data packets, can tag the data packets with labels and/or timestamps, and/or perform a MPLS (multi protocol label switching) and preferably set QoS parameter. However, it may be not required that each data packet associated with one or more of the application sessions, i.e. services, passes through its respective latency controller, since the measurement of the respective time delay can be performed indirectly, wherein the actual measurement is performed by a respective network node or a respective latency equalizer.

In particular, the LECs 30, 31, 32, 33, 34, 35, and 36 can be integrated as software or hardware means in an edge router, a DSLAM or an access node of the first and/or second communication network 10, 11, respectively. However, it is also possible that one ore more of the LECs 30, 31, 32, 33, 34, 35, and 36 are network nodes.

Furthermore, the first domain comprises a LEQ service gateway 70 which has access to a database 71 for holding and storing data associated with the four application sessions₁₋₄. The LEQ service gateway 70 can be accessible by means of a terminal, e.g. providing a web-interface and/or a graphical user interface, through a latency equalizer application programming interface 72. Preferably, the LEQ service gateway 70 provides a web services interface, which enables to be used by another program, e.g. similar to remote procedure calls. Using the web service API, i.e. the LEC API, a third party program can dynamically setup and control sessions and session participants and assign roles (controller vs equalizer) to the LECs participating in the session. It is possible that the LEQ service gateway 70 is implemented on a server anywhere in the communication network 10 within the first domain. The location or position of the LEQ service gateway 70 is independent and thereby it can be anywhere in the communication network 10. The latency equalizer service gateway 70 can be used for assigning the latency controllers to application server and the respective latency equalizers to the respective application clients by means of LEQ API.

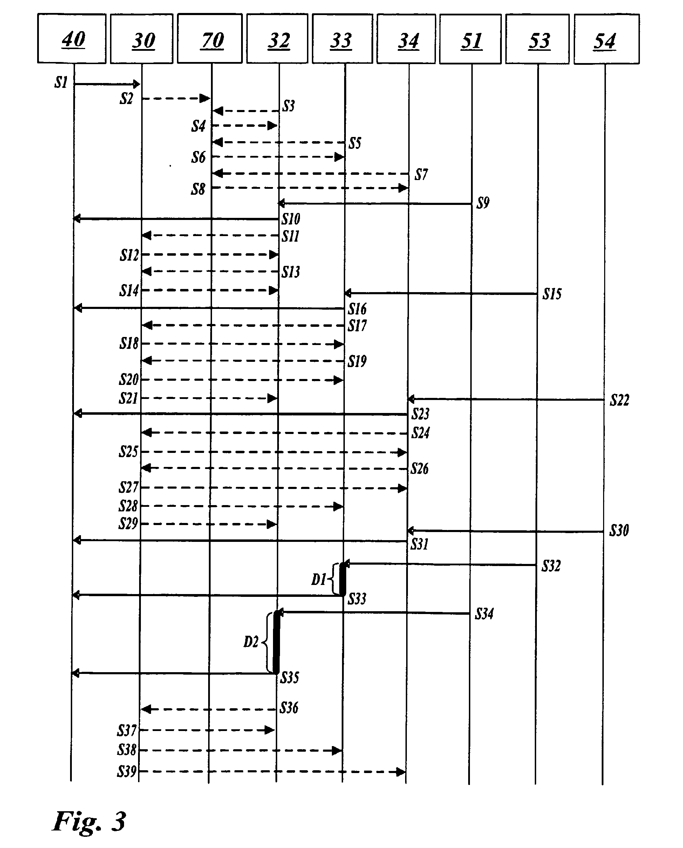

In Figure 1 as well as in Figure 3 which will be described later, full arrows are associated with massage and/or data packet exchanges of the four application sessions₁₋₄. Dashed arrows are associated with massage and/or data packet exchanges between the LECs 30, 31, 32, 33, 34, 35, 36, the LEQ service gateway 70, the data base 71 and latency equalizer application programming interface 72, wherein these exchanged massage and/or data packet exchanges are related to administer latency equalization and comprise in particular address information related with the four application sessions₁₋₄, but do not comprise data packets associated with the four application sessions₁₋₄ comprising application data. The messages and/or data packets can be exchanged between the LECs 30, 31, 32, 33, 34, 35, 36, the LEQ service gateway 70, and/or the data base 71 are exchanged by means of a SOAP (SOAP = simple object access protocol) and/or a SIP (SIP = session initiation protocol). The use of SOAP or SIP is preferred or recommended for the communication between a third party service and the LEQ service gateway 70. However, preferably for the communication between the LECs and the LEQ service gateway a specifically adapted protocol is used, which is thereby more efficient.

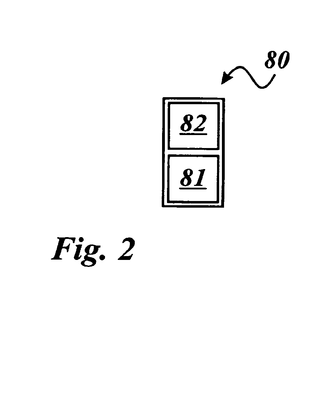

Figure 2 shows an exemplary node 80 of the communication network 10 or 11. The node 80 can be one of the LECs 30, 31, 32, 33, 34, 35, or 36, the net work nodes 40, 41, 42, 50, 51, 52, 53, 54, 55, 56, 57, or 60, or LEQ service gateway 70. The node 80 comprises a control unit 82 and communication unit 81 providing communication functionality, in particular a TCP/IP stack (TCP = transmission control protocol) enabling a packet based communication via the LANs 20, 21, 22, 23 and 24 and communication network 10 and 11 as well as the Internet. Furthermore, the control unit 82 and/or the communication unit 82 can be adapted to perform DPI (DPI = deep packet inspection) and/or MPLS (MPLS = multi protocol label switching). The communication unit 81 may be adapted to communicate via DSL (DSL = digital subscriber line) and/or FTTH (FTTH = fiber to the home). In particular, it is possible the control unit 82 and/or the communication unit 82 to filter data packets according to an IP address and/or IP port associated with the data packet, wherein the IP address and/or the IP port is associated with one or more of the application services. Furthermore, it is also possible that a peer to peer technique is provided by the control unit 82 and/or the communication unit 82.

Returning to Figure 1: In order to administer the LECs 30, 31, 32, 33, 34, 35, 36, the LEQ service gateway 70, and/or the data base 71, the LEQ service gateway 70 provides an LEQ API (API = application programming interface. The LEQ API may be offered to authorized third parties. The LEQ API offer and/or provide the following functions: authentication, authorization, accounting, session setup, registrar, adding and/or removing participants, and/or session termination.

A typical application example of the presently preferred embodiment of the invention is as follows: For instance, a large game publishing company can operate so called match making servers to accommodate peer to peer game titles. Such publishing company can be an authorized third party. Any user can host a multiparty game session where his console or personal computer, i.e. a network node, acts as the game server, i.e. the application server. The IP address of this game host, i.e. game server, may be registered at the match making server operated by the authorized third party. Other users who wish to participate in the game, i.e. the application service, contact the match making server and select one of the available game host from a list presented by the match making server.

The match making server has knowledge about the location, i.e. IP addresses and port numbers, of the game host and other participants. With this information, the match making server can utilize the services offered by the LEQ API, also called a LEQ service gateway API, to setup a latency equalized game session between all game participants.

In particular, in order to guarantee interoperability of the latency equalization between different third parties and/or network domains, e.g. the first domain comprising the first communication network 10 and the second domain comprising the second communication network 11, as well as of the services, it may be provided that session participants in each domain have the latency equalization functionality implemented in the network path, preferably as close to the edge as possible, the communication protocol between the LECs is common or standardized, and/or an interoperability protocol between latency equalization enabled service is defined such that clients in each domain can be informed about the application server address for each session. Thereby, it is possible that the latency equalization enabled service allows application clients and host to be spread across multiple domains.

The online game match making servers use the LEQ service gateway API to assign the game host and game participants in a particular game session. Hence, the IP address of the game host and all session participants are provided to the LEQ service gateway 70 through the LEQ service gateway API. The LEQ service gateway 70 informs the with the game session associated LECs through its LEQ service gateway API. Each client in the session communicates with the designated latency controller to establish the amount of delay that need to be applied.

Figure 3 illustrates an exemplary transfer of exchanged massages between the entities of the pervious described exemplary embodiment of the present invention. The message sequence diagram in Figure 3 illustrates the operation of the invention for the first application session between application client₁, application client₃ and application client₄ with application server₁. The first application session, i.e. a service, is provided by the for network nodes 40, 51, 53, and 54, wherein the network node 40 acts as application server₁ and the network nodes 51, 53, and 54 act as application client₁, application client₃ and application client₄, respectively.

The example illustrates how latency equalization can be realized with the invention. Without latency equalization, the latency between application client₃ and application server₁ is assumed to be the highest while the latency between application client₁ and application server₁ is assumed to be the lowest, and therefore it needs the highest queue delay.

Similar, the latencies between the application client₇, the application client₉ and the application client₁₀ and the application server₂ associated with the second application session, and the application clients and servers associated with the third and fourth application session, respectively may be all different.

In particular, the LECs acting as latency equalizers of the preferred embodiment comprise each one or more queues for each of their associated application client. Data packets send by an application client are intercepted by their associated LECs acting latency equalizer. The LECs acting as latency equalizers keep the data packets within their queue for a certain amount of time, i.e. the respective additional time delay, after which the data packets are forwarded to its destination. This imposed queue delay is determined by the LEC acting latency controller such that the delay between its associated application clients within the same session is approximately equal.

Returning to the diagram of figure 3, the diagram illustrates an exemplary transfer of exchanged massages between the application client₁, the application client₃ and the application client₄ with the application server₁ by means of the entities of the pervious described exemplary embodiment of the present invention. The message sequence diagram in Figure 3 illustrates the operation of the invention for the first application session₁. The diagram illustrates latency equalization in one direction, i.e. the client to server direction, only, but equalization could be applied in both directions if needed.

The message sequence diagram comprises the message exchanges S1 to S39 as follows:
- S1: The network node 40 acting as application server₁ is associated with the LEC 30 acting as latency controller. The IP address and port number associated with the application server₁ is passed to the LEC 30. The association could be a manual configuration or automated.
- S2: The LEC 30 registers itself with the LEQ service gateway 70 and passes its own address as well as the address and port number of the application server₁ and possibly further addresses and port numbers of further with the LEC 30 associated application servers. The address of the LEQ service gateway 70 can be pre-configured in each LEC acting as latency controller.
- S3: Upon initialization, and periodically thereafter, the LEC 32 requests a list of registered LECs acting as latency controllers from the LEQ service gateway 70. The address of the LEQ service gateway 70 can be pre-configured in the LEC 32.
- S4: The LEQ service gateway 70 replies with a list of LECs acting as latency controller addresses or address masks. The address or address mask allows a LEC acting as latency equalizer, in particular the LEC 32, to recognize and associate traffic between an application client and an application server with the latency controller which is in the present example the LEC 30.
- S5: As step S3 yet for the LEC 33: Upon initialization, and periodically thereafter, the LEC 33 requests a list of registered LECs acting as latency controllers from the LEQ service gateway 70. The address of the LEQ service gateway 70 can also be pre-configured in the LEC 33.
- S6: As step S4 yet for the LEC 33: The LEQ service gateway 70 replies with a list of LECs acting as latency controller addresses or address masks.
- S7: As step S3 yet for the LEC 34: Upon initialization, and periodically thereafter, the LEC 34 requests a list of registered LECs acting as latency controllers from the LEQ service gateway 70. The address of the LEQ service gateway 70 can also be pre-configured in the LEC 34.
- S8: As step S4 yet for the LEC 34: The LEQ service gateway 70 replies with a list of LECs acting as latency controller addresses or address masks.
- S9: The application client₁ at the network node 51 starts a client-server session with the application server₁ at the network node 40. The message is intercepted by the LEC 32. The LEC 32 recognizes the associated LEC 30 from the destination address of the application server₁ using the mask or address information obtained in step S4. The LEC 32 creates a message delay queue for this session. The queue will delay future messages being send from the application client₁ to the application server₁. The delay value will be specified periodically by the LEC 32, e.g. as in step S14.
- S10: The LEC 32 forwards the message to the destination application server₁ at the network node 40.
- S11: The LEC 32 notifies the LEC 30 about that a client-server session has been established between the application client₁ and the application server₁.
- S12: The LEC 30 request timestamp information from the LEC 32 and registers its local timestamp.
- S13: The LEC 32 replies with its local timestamp. The LEC 30 can derive the clock offset value between the LEC 32 and the LEC 30, and the transmission latency value. The clock offset and latency values, which are time delays, are registered within the LEC 30.
- S14: The LEC 30 specifies the queue delay value, i.e. the additional time delay, to be used for future messages being transmitted from the application client₁ to the application server₁. This value is calculated by measuring the transmission delay values from all communication links between the application server₁ and all application clients in the session. The delay value for each LEC acting as latency equalizer is such that the desired latency equalization is realized.
- S15: As step S9 yet for the LEC 33: The application client₃ at the network node 53 starts a client-server session with the application server₁ at the network node 40. The message is intercepted by the LEC 33. The LEC 33 recognizes the associated LEC 30 from the destination address of the application server₁ using the mask or address information obtained in step S4. The LEC 33 creates a message delay queue for this session. The queue will delay future messages being send from the application client₃ to the application server₁. The delay value will also be specified periodically by the LEC 33.
- S16: As step S10 yet for the LEC 33: The LEC 33 forwards the message to the destination application server₁ at the network node 40.
- S17: As step S11 yet for the LEC 33: The LEC 33 notifies the LEC 30 about that a client-server session has been established between the application client₃ and the application server₁.
- S18: As step S12 yet for the LEC 33: The LEC 30 request timestamp information from the LEC 33 and registers its local timestamp.
- S19: As step S13 yet for the LEC 33: The LEC 33 replies with its local timestamp. The LEC 30 can derive the clock offset value between the LEC 33 and the LEC 30, and the transmission latency value. The clock offset and latency values, which are time delays, are registered within the LEC 30.
- S20: As step S14 yet for the LEC 33: The LEC 30 specifies the queue delay value, i.e. the additional time delay, to be used for future messages being transmitted from the application client₃ to the application server₁. This value is calculated by measuring the transmission delay values as described in step S14.
- S21: Because a new application client has joined the session, the LEC 30 updates the queue delay value for the LEC 32.
- S22: As step S9 for the LEC 34: The application client₄ at the network node 54 starts a client-server session with the application server₁ at the network node 40. The message is intercepted by the LEC 34. The LEC 34 recognizes the associated LEC 30 from the destination address of the application server₁ using the mask or address information obtained in step 4. The LEC 34 creates a message delay queue for this session. The queue will delay future messages being send from the application client₄ to the application server₁. The delay value will also be specified periodically by the LEC 34.
- S23: As step S10 for the LEC 34: The LEC 34 forwards the message to the destination application server₁ at the network node 40.
- S24: As step S11 for the LEC 34: The LEC 34 notifies the LEC 30 about that a client-server session has been established between the application client₄ and the application server₁.
- S25: As step S12 for the LEC 34: The LEC 30 request timestamp information from the LEC 34 and registers its local timestamp.
- S26: As step S13 for the LEC 34: The LEC 34 replies with its local timestamp. The LEC 30 can derive the clock offset value between the LEC 34 and the LEC 30, and the transmission latency value. The clock offset and latency values, which are time delays, are registered within the LEC 30.
- S27: As step S14 for the LEC 34: The LEC 30 specifies the queue delay value, i.e. the additional time delay, to be used for future messages being transmitted from the application client₄ to the application server₁. This value is calculated by measuring the transmission delay values as described in step S14.
- S28: As step S21 for the LEC 33: A new application client has joined the session, and therefore the LEC 30 updates the queue delay value for the LEC 33.
- S29: As step S21 for the LEC 34: Because a new application client has joined the session, the LEC 30 updates the queue delay value for the LEC 34.
- S30: The application Client₃ sends a message to application server₁. In this example, the latency between application client₃ and application server₁ is assumed to be the highest; therefore the message is queued with zero delay, i.e. with no time delay which corresponds to a zero additional time delay.
- S31: The LEC 34 forwards the message from the application client₃ to the application server₁.
- S32: The application client₂ sends a message to the application server₁. In this example, the latency between the application client₂ and the application server₁ is assumed to be the second highest; therefore the message is queued with a short delay, i.e. the respective additional time delay D1.
- S33: The LEC 33 forwards the message from the application client₂ to the application server₁.
- S34: The application client₁ sends a message to the application server₁. In this example, the latency between the application client₁ and the application server₁ is assumed to be the lowest; therefore the message is queued with a long delay, i.e. the respective additional time delay D2.
- S35: The LEC 32 forwards the message from the application client₁ to the application server₁.
- S36: The LEC 33, and all other LECs acting as latency equalizers, periodically sends a timestamp message to the LEC 30. If the delay value has changed, the LEC 30 will calculate new time delay values for all application clients in the session and updates each associated LEC acting as latency equalizer.
- S37: The LEC 32 is updated with a new queue delay value, i.e. a new respective additional time delay.
- S38: The LEC 33 is updated with a new queue delay value, i.e. a new respective additional time delay.
- S39: The LEC 34 is updated with a new queue delay value, i.e. a new respective additional time delay.

The solution with a passive LEC acting as latency controller would be similar, except that the communication between the LEC acting as latency equalizer and the with the LEC acting as latency equalizer associated node providing the application server will be monitored and the time delay will be communicated back to the LEC acting as latency equalizer.

## Claims

1. Method of network delay equalization for equalizing a transfer of data packets associated with at least one service provided by at least one application server (40) connected to a first local network (20) to at least two application clients (51, 53, 54), wherein a latency controller (30) connected to the same local network (20) as the at least one application sever (40) and associated with the at least one application server (40) is positioned in the communication path between the application clients (51, 53, 54) connected to second local networks (22, 23) being different from the first local network (20) and the application server (40), and
wherein the method comprises the steps of:
providing for each of said application clients (51, 53, 54) a latency equalizer (32, 33, 34) connected to the same local network (22, 23) as the respective application client (51, 53, 54) of the said application clients (51, 53, 54) wherein the latency equalizer (32, 33, 34) is implemented within the communication path nearby an associated network node which provides and/or executes the application client (51, 53, 54) and wherein a time delay for data packets exchanged between the latency equalizer (32, 33, 34) and its associated application client (51, 53, 54) is at least five times smaller than the respective time delay associated with the transfer of the data packet between the latency equalizer (32, 33, 34) and the respective latency controller (30),
measuring, by the latency controller (30) associated with said at least one application server (40), for at least two of said application clients (51, 53, 54) a respective time delay associated with a transfer of a data packet between said application server (40) and the respective application client wherein a time delay for data packets exchanged between the latency controller (30) and its associated application server (40) is at least five times smaller than the respective time delay associated with the transfer of the data packet between the latency controller (30) and the respective latency equalizer (32, 33, 34),
calculating, by the latency controller (30), for each of the at least two application clients (51, 53, 54) a respective additional time delay based on the measured respective time delay with a constraint that each respective sum of the respective additional time delay and the respective time delay is of equal size, sending, by the latency controller (30), the respective additional time delays to the latency equalizers (32, 33, 34) associated with the respective application clients (51, 53, 54), and
scheduling, by each latency equalizer (32, 33, 34), the data packets associated with the at least one service according to the received respective additional time delay.

2. Method of network delay equalization according to claim 1,
wherein the method comprises the step of:
transferring data packets associated with the at least one service between the application server (40) and at least one of the application clients (51, 53, 54) via a communication network (10), wherein the latency equalizer (32, 33, 34) interconnects its associated application client (51, 53, 54) with the communication network (10).

3. Method of network delay equalization according to claim 1, wherein the method comprises the step of:
instantiating the application server (60) and at least one of the application clients (60) on the same network node, and
transferring data packets associated with the at least one service between the application server (60) and said application client (60).

4. Method of network delay equalization according to claim 3, wherein the method comprises the step of:
transferring the data packets associated with the at least one service between the application server (60) and said application client (60) by means of inter process communication.

5. Method of network delay equalization according to claim 1, wherein the measuring the respective time delay comprises the steps of:
monitoring, by the latency equalizer (32, 33, 34), the transfer of the data packets associated with the at least one service between said application server (40) and the respective application clients (51, 53, 54),
assigning, by the respective latency equalizer (32, 33, 34) and/or the respective application client (51, 53, 54), a timestamp to one or more data packets prior sending it to said application server (40), and
determining, by the latency controller (30), by means of said one or more timestamps associated with the data packets the respective time delays.

6. Method of network delay equalization according to claim 1, wherein the measuring the respective time delay comprises the steps of:
issuing, by the latency controller (30), a timestamp request message to one or more of said latency equalizers (32, 33, 34) associated with the application clients (51, 53, 54), responding, by the one or more of said latency equalizers (32, 33, 34), to the timestamp request message by means of sending a respective reply message to the latency controller (30), the respective reply message comprising a timestamp indicating a local clock value of the latency equalizer (32, 33, 34) associated with the reception of the timestamp request message, and
determining, by the latency controller (30), by means of said one or more timestamps received with said respective reply messages the respective time delay associated with the transfer of the data packet.

7. Method of network delay equalization according to claim 1,
wherein the measuring the respective time delay comprises the steps of:
issuing, by the latency controller (30), a reply request message to one or more of said latency equalizers (32, 33, 34) associated with the application clients (51, 53, 54),
responding, by the one or more of said latency equalizers (32, 33, 34), to the reply request message by means of sending a respective reply message to the latency controller (30), and determining, by the latency controller (30), by means of a local clock value associated with the issuing of the reply request message and
a local clock value associated with a reception of the respective reply message the respective time delay associated with the transfer of the data packet, wherein the local clock values being associated with the latency controller (30).

8. Method of network delay equalization according to claim 1,
wherein the method comprises the steps of:
determining, by the latency controller (30), a maximum time delay from the measured respective time delays, and
assigning, by the latency controller (30), for each of the application clients (51, 53, 54) as calculated respective additional time delay a difference of the maximum time delay and the respective time delay associated with the respective application client (51, 53, 54).

9. Method of network delay equalization according to claim 1,
wherein the latency controller (30) performs the step of measuring two or more times, calculates an averaged respective time delay as the respective time delay based on the two or more times measured respective time delays and calculates for the application clients (51, 53, 54) a new respective additional time delay based on the averaged respective time delay.

10. Method of network delay equalization according to claim 9,
wherein the latency controller (30) performs the step of measuring two or more times, preferably periodically every 10 seconds to 1 minute.

11. Method of network delay equalization according to claim 1,
wherein the latency controller (30) performs the step of measuring periodically, preferably every 10 seconds to 1 minute, and calculates periodically a new respective additional time delay as the respective additional time delay based on the new respective time delay.

12. Method of network delay equalization according to claim 1,
wherein the method comprises the steps of:
assigning, by a latency equalizer service gateway (70), said latency controller (30) to said application server (40) and said latency equalizers (32, 33, 34) to said application clients (51, 53, 54).

13. Method of network delay equalization according to claim 12, wherein method comprises the steps of:
providing, by the latency equalizer service gateway (70), a latency equalizer application programming interface (72) enabling the assigning of said latency controller (30) and said latency equalizer (32, 33, 34), the latency equalizer application programming interface (72) comprises an authentication functionality for accessing the at least one service, an authorization functionality for accessing the latency equalizer service gateway (70), an accounting functionality for usage of the at least one service, a session setup and termination functionality for session initiation and termination, respectively of the at least one service, and/or a controlling functionality of the at least one service, and
holding, by a data base (71), data related with the at least one services and data related with said latency equalizer (32, 33, 34) and/or said latency controller (30).

14. Latency controller (30) connected to a first local network (20) for equalizing a transfer of data packets associated with at least one service provided by at least one application server (40) connected to the same local network (20) as the latency controller (30) to at least two application clients (51, 53, 54) connected to second local networks (22, 23) being different from the first local network (20), wherein the latency controller (30) comprises a control unit (82) adapted to measure for at least two of said application clients (51, 53, 54) a respective time delay associated with a transfer of a data packet between the application server (40) and the application clients (51, 53, 54) wherein the latency controller (30) associated with the at least one application server (40) is positioned in the communication path between an application client (51, 53, 54) and the respective application server (40) and wherein a time delay for data packets exchanged between the latency controller (30) and its associated application server (40) is at least five times smaller than the respective time delay associated with the transfer of the data packet between the latency controller (30) and a respective latency equalizer (32, 33, 34) provided for the application client (51, 53, 54), connected to the same local network (22, 23) as the respective application client (51, 53, 54) of the said application clients (51, 53, 54) and implemented within the communication path nearby an associated network node which provides and/or executes the application client (51, 53, 54), to calculate for each of the at least two application clients (51, 53, 54) a respective additional time delay based on the measured respective time delay with a constraint that each respective sum of the respective additional time delay and the respective time delay is of equal size, and to send the respective additional time delays to the latency equalizer (32, 33, 34) associated with the respective application client (51, 53, 54).

15. Latency equalizer (32, 33, 34) connected to a first local network (22, 23) for equalizing a transfer of data packets associated with at least one service provided by at least one application server (40) connected to a second local network (20) being different from the first local network (22, 23) to at least two application clients (51, 53, 54) connected to local networks (22, 23) being different from second local network (20), wherein the latency equalizer (32, 33, 34) comprises a control unit (82) adapted to receive an additional time delay from a latency controller (30) connected to the same second local network (20) as the application server (40) associated with the application server (40) wherein the latency equalizer (32, 33, 34) is provided for a respective application client of the said aplication clients (51, 53, 54) and is implemented within the communication path nearby its associated network node which provides and/or executes the application client (51, 53, 54), the respective application client being connected to the first local network (22, 23) and wherein a time delay for data packets exchanged between the latency equalizer (32, 33, 34) and its associated application client (51, 53, 54) is at least five times smaller than a respective time delay associated with the transfer of the data packet between the latency equalizer (32, 33, 34) and the respective latency controller (30) associated with the at least one application server (40) and positioned in the communication path between an application client (51, 53, 54) and the respective application server (40), and to schedule the data packets associated with the at least one service according to the received additional time delay.

## Patentansprüche

1. Verfahren zur Netzwerklaufzeitentzerrung zur Entzerrung einer Übertragung von Datenpakete, die mit mindestens einem von mindestens einem an ein erstes lokales Netzwerk (20) angeschlossenen Anwendungsserver (40) bereitgestellten Dienst assoziiert sind, an mindestens zwei Anwendungs-Clients (51, 53, 54), wobei eine Verzögerungssteuerung (30), welche an dasselbe lokale Netzwerk (20) wie der mindestens eine Anwendungsserver (40) angeschlossen und mit dem mindestens einen Anwendungsserver (40) assoziiert ist, in dem Kommunikationspfad zwischen den Anwendungs-Clients (51, 53, 54), die an zweite lokale Netzwerke (22, 23), welche sich von dem ersten lokalen Netzwerk (20) unterscheiden, angeschlossen sind, und dem Anwendungsserver (40) angeordnet ist, und
wobei das Verfahren die folgenden Schritte umfasst:
Bereitstellen, für einen jeden der besagten Anwendungs-Clients (51, 53, 54), eines Verzögerungsentzerrers (32, 33, 34), welcher an dasselbe lokale Netzwerk (22, 23) wie der entsprechende Anwendungs-Client (51, 53, 54) der besagten Anwendungs-Clients (51, 53, 54) angeschlossen ist, wobei der Verzögerungsentzerrer (32, 33, 34) Innerhalb des Kommunlkationspfads in der Nähe eines assoziierten Netzwerkknotens, welcher den Anwendungs-Client (51, 53, 54) bereitstellt und/oder ausführt, Implementiert wird, und wobei eine Zeitverzögerung für zwischen dem Verzögerungsentzerrer (32, 33, 34) und seinem assoziierten Anwendungs-Client (51, 53, 54) ausgetauschte Datenpakete mindestens fünf Mal kleiner ist als die entsprechende mit der Übertragung der Datenpakete zwischen dem Verzögerungsentzerrer (32, 33, 34) und der entsprechenden Verzögerungssteuerung (30) assoziierte Zeitverzögerung, Messen, durch die mit dem besagten mindestens einen Anwendungsserver (40) assoziierte Verzögerungssteuerung (30), für mindestens zwei der besagten Anwendungs-Clients (51, 53, 54), einer entsprechenden mit einer Übertragung von Datenpaketen zwischen dem besagten Anwendungsserver (40) und dem entsprechenden Anwendungs-Client assoziierten Zeitverzögerung, wobei eine Zeitverzögerung für zwischen der Verzögerungssteuerung (30) und ihrem assoziierten Anwendungsserver (40) ausgetauschte Datenpakete mindestens fünf Mal kleiner ist als die entsprechende mit der Übertragung der Datenpakete zwischen der Verzögerungssteuerung (30) und dem entsprechenden Verzögerungsentzerrer (32, 33, 34) assoziierte Zeitverzögerung,
Berechnen, durch die Verzögerungssteuerung (30), für einen jeden der mindestens zwei Anwendungs-Clients (51, 53, 54), einer entsprechenden zusätzlichen Zeitverzögerung auf der Basis der gemessenen entsprechenden Zeitverzögerung mit einer Bedingung, dass jede entsprechende Summe der entsprechenden zusätzlichen Zeitverzögerung und der entsprechenden Zeitverzögerung gleich grvl3 ist,
Senden, durch die Verzögerungssteuerung (30), der entsprechenden zusätzlichen Zeitverzögerungen an die mit den entsprechenden Anwendungs-Clients (51, 53, 54) assoziierten Verzögerungsentzerrer (32, 33, 34), und
Planen, durch einen jeden Verzögerungsentzerrer (32, 33, 34), der mit dem mindestens einen Dienst assoziierten Datenpakete gemäß der empfangenen entsprechenden zusätzlichen Zeitverzögerung.

2. Verfahren zur Netzwerklaufzeitentzerrung nach Anspruch 1, wobei das Verfahren den folgenden Schritt umfasst:
Übertragen von mit dem mindestens einen Dienst assoziierten Datenpaketen zwischen dem Anwendungsserver (40) und mindestens einem der Anwendungs-Clients (51, 53, 54) über ein Kommunikationsnetzwerk (10), wobei der Verzögerungsentzerrer (32, 33, 34) seinen assoziierten Anwendungs-Client (51, 53, 54) mit dem Kommunikationsnetzwerk (10) zusammenschaltet.

3. Verfahren zur Netzwerklaufzeitentzerrung nach Anspruch 1, wobei das Verfahren den folgenden Schritt umfasst:
Instanzlieren des Anwendungsservers (60) und mindestes eines der Anwendungs-Clients (60) auf derselben Netzwerkknoten, und Übertragen von mit dem mindestens einen Dienst assoziierten Datenpaktaten zwischen dem Anwendungsserver (60) und dem besagten Anwendungs-Client (60).

4. Verfahren zur Netzwerklaufzeitentzerrung nach Anspruch 3, wobei das Verfahren den folgenden Schritt umfasst:
Übertragen der mit dem mindestens einen Dienst assoziierten Datenpakete zwischen dem Anwendungsserver (60) und dem besagten Anwendungs-Client (60) anhand einer Interprozesskommunikation.

5. Verfahren zur Netzwerklaufzeitentzerrung nach Anspruch 1, wobei das Messen der entsprechenden Zeitverzögerung die folgenden Schritte umfasst:
Überwachen, durch den Verzögerungsentzerrer (32, 33, 34), der Übertragung der mit dem mindestens einen Dienst assoziierten Datenpakete zwischen dem besagten Anwendungsserver (40) und den entsprechenden Anwendungs-Clients (51, 53, 54),
Zuordnen, durch den entsprechenden Verzögerungsentzerrer (32, 33, 34) und/oder den entsprechenden Anwendungs-Client (51, 53, 54), eines Zeitstempels zu einem oder mehreren Datenpaket(en), bevor diese(s) an den besagten Anwendungsserver (40) gesendet wird/werden,
und
Bestimmen, durch die Verzögerungssteuerung (30), der entsprechenden Zeitverzögerungen anhand des/der besagten einen oder mehreren mit den Datenpaketen assoziierten Zeitstempel(s).

6. Verfahren zur Netzwerklaufzeitentzerrung nach Anspruch 1, wobei das Messen der entsprechenden Zeitverzögerung die folgenden Schritte umfasst:
Ausgeben, durch die Verzögerungssteuerung (30), einer Zeitstempelanforderuriganachricht an einen oder mehrere der besagten mit den Anwendungs-Clients (51, 53, 54) assoziierten Verzögerungsentzerrer (32, 33, 34), Reagieren, durch den einen oder mehrere der besagten Verzögerungsentzerrer (32, 33, 34), auf die Zeitstempelanforderungsnachricht durch Senden einer entsprechenden Antwortnachricht an die Verzögerungssteuerung (30), wobei die entsprechende Antwortnachricht einen Zeitstempel enthält, welcher einen lokalen Taktgeberwert des Verzögerungsentzerrers (32, 33, 34), welcher mit dem Empfang der Zeitstempelanforderungsnachricht assoziiert ist, anzeigt, und
Bestimmen, durch die Verzögerungssteuerung (30), der entsprechenden mit der Übertragung des Datenpakets assoziierten Zeitverzögerung anhand des besagten einen oder der besagten mehreren mit den entsprechenden Antwortnachrichten empfangenen Zeltstempel(s).

7. Verfahren zur Netzwerklaufzeitentzerrung nach Anspruch 1, wobei das Messen der entsprechenden Zeitverzögerung die folgenden Schritte umfasst:
Ausgeben, durch die Verzögerungssteuerung (30), einer Antwortanforderungsnachrlcht an einen oder mehrere der besagten mit den Anwendungs-Ciients (51, 53, 54) assoziierten Verzögerungsentzerrer (32, 33, 34), Reagieren, durch den einen oder mehrere der besagten Verzögerungsentzerrer (32, 33, 34), auf die Antwortanforderungsnachricht durch Senden einer entsprechenden Antwortnachricht an die Verzögerungssteuerung (30), und
Bestimmen, durch die Verzögerungssteuerung (30), der entsprechenden mit der Übertragung des Datenpakets assoziierten Zeitverzögerung anhand eines mit der Ausgabe der Antwortanforderungsnachricht assoziierten lokalen Taktgeberwertes und eines mit einem Empfang der entsprechenden Antwortnachricht assoziierten lokalen Taktgeberwertes, wobei die lokalen Taktgeberwerte mit der Verzögerungssteuerung (30) assoziiert sind.

8. Verfahren zur Netzwerklaufzeltentzerrung nach Anspruch 1, wobei das Verfahren die folgenden Schritte umfasst:
Bestimmen, durch die Verzögerungssteuerung (30), einer maximalen Zeitverzögerung aus den gemessenen entsprechenden Zeitverzögerungen, und
Zuordnen, durch die Verzögerungssteuerung (30), für einen jeden der Anwendungs-Clients (51, 53, 54), einer Differenz zwischen der maximalen Zeitverzögerung und der entsprechenden mit dem entsprechenden Anwendungs-Client (51, 53, 54) assoziierten Zeitverzögerung als eine berechnete entsprechende zusätzliche Zeitverzögerung.

9. Verfahren zur Netzwerklaufzeltentzerrung nach Anspruch 1, wobei die Verzögerungssteuerung (30) den Schritt des Messens zwei oder mehrere Male durchführt, eine gemittelte entsprechende Zeitverzögerung als die entsprechende Zeitverzögerung auf der Basis der zwei oder mehrere Male gemessenen entsprechenden Zeitverzögerungen berechnet und für die Anwendungs-Clients (51, 53, 54) eine neue entsprechende zusätzliche Zeitverzögerung auf der Basis der gemittelten entsprechenden Zeitverzögerung berechnet.

10. Verfahren zur Netzwerklaufzeitentzerrung nach Anspruch 9, wobei die Verzögerungssteuerung (30) den Schritt des zwei- oder mehrmaligen Messens, vorzugsweise periodisch in Zeitabständen von 10 Sekunden bis 1 Minute, durchführt.

11. Verfahren zur Netzwerklaufzeitentzerrung nach Anspruch 1, wobei die Verzögerungssteuerung (30) den Schritt des Messens periodisch, vorzugsweise in Zeitabständen von 10 Sekunden bis 1 Minute, durchführt und periodisch eine neue entsprechende zusätzliche Zeitverzögerung als die entsprechende zusätzliche Zeitverzögerung auf der Basis der neuen entsprechenden Zeitverzögerung berechnet.

12. Verfahren zur Natzwerklaufzaitantzarrung nach Anspruch 1, wobei das Verfahren weiterhin die folgenden Schritte umfasst:
Zuordnen, durch ein Dianst-Gataway (70) des Verzögerungsentzerrers, der besagten Verzägerungssteuerung (30) zu dem besagten Anwendungsserver (40) und der besagten Verzögerungsentzerrer (32, 33, 34) zu den besagten Anwendungs-Cilents (51, 53, 54).

13. Verfahren zur Netzwerklaufzeitentzerrung 12, wobei das Verfahren die folgenden Schritte umfasst:
Bereitstellen, durch das Dienst-Gateway (70) des Verzögerungsentzerrers, einer Anwendungsprogrammierungsschnittstelle (72) des Verzögerungsentzerrers, welche das Zuordnen der besagten Verzögerungssteuerung (30) und des besagten Verzögerungsentzerrers (32, 33, 34) ermöglicht, wobei die Anwendungsprogrammierungsschnittstelle (72) des Verzögerungsentzerrers eine Authentifizierungsfunktionalität für den Zugriff auf den mindestens einen Dienst, eine Autorisierungsfunktionalität für den Zugriff auf das Dienst-Gateway (70) des Verzögerungsentzerrers, eine Abrechnungsfunktionalität für die Nutzung des mindestens einen Dienstes, eine Sitzungsaufbau- und -beendigungsfunktionalität für die Einleitung bzw. die Beendigung der Sitzung des mindestens einen Dienstes, und/oder eine Steuerungsfunktionalität des mindestens einen Dienstes umfasst, und
Halten, durch eine Datenbank (71), von Daten, die sich auf den mindestens einen Dienst beziehen, und von Daten, die sich auf den besagten Verzögerungsentzerrer (32, 33, 34) und/oder die besagte Verzögerungssteuerung (30) beziehen.

14. Verzögerungssteuerung (30), welche an ein erstes lokales Netzwerk (20) angeschlossen ist, zum Entzerren einer Übertragung von Datenpaketen, die mit mindestens einem von mindestens einem an dasselbe lokale Netzwerk (20) wie die Verzögerungssteuerung (30) angeschlossenen Anwendungsserver (40) bereitgestellten Dienst assoziiert sind, an mindestens zwei Anwendungs-Clients (51, 53, 54), welche an zweite lokale Netzwerke (22, 23), die sich von dem ersten lokalen Netzwerk (20) unterscheiden, angeschlossen sind, wobei die Verzögerungssteuerung (30) eine Steuereinheit (82) umfasst, welche dazu ausgelegt ist, für mindestens zwei der besagten Anwendungs-Clients (51, 53, 54) eine entsprechende mit einer Übertragung eines Datenpakets zwischen dem Anwendungsserver (40) und den Anwendungs-Clients (51, 53, 54) assoziierte Zeitverzögerung zu messen, wobei die mit dem mindestens einen Anwendungsserver (40) assoziierte Verzögerungssteuerung (30) in dem Kommunikationspfad zwischen einem Anwendungs-Client (51, 53, 54) und dem entsprechenden Anwendungsserver (40) angeordnet ist, und wobei eine Zeitverzögerung für zwischen der Verzögerungssteuerung (30) und Ihrem assoziierten Anwendungsserver (40) ausgetauschte Datenpakete mindestens fünf Mal kleiner ist als die entsprechende Zeitverzögerung, welche mit der Übertragung von Datenpaketen zwischen der Verzögerungssteuerung (30) und einem entsprechenden für den Anwendungs-Client (51, 53, 54), welcher an dasselbe lokale Netzwerk (22, 23) wie der entsprechende Anwendungs-Client (51, 53, 54) der besagten Anwendungs-Clients (51, 53, 54) angeschlossen ist und innerhalb des Kommunikationspfads in der Nähe eines assoziierten Netzwerkknotens, welcher den Anwendungs-Client (51, 53, 54) bereitstellt und/oder ausführt, implementiert wird, assoziiert ist, bereitgestellten Verzögerungsentzerrer (32, 33, 34), für einen jeden der mindestens zwei Anwendungs-Clients (51, 53, 54) eine entsprechende zusätzliche Zeitverzögerung auf der Basis der gemessenen entsprechenden Zeitverzögerung mit einer Bedingung, dass jede entsprechende Summe der entsprechenden zusätzlichen Zeitverzögerung und der entsprechenden Zeitverzögerung gleich groß Ist, zu berechnen, und die entsprechenden zusätzlichen Zeitverzögerungen an den mit dem entsprechenden Anwendungs-Client (51, 53, 54) assoziierten Verzögerungsentzerrer (32, 33, 34) zu senden.

15. Verzögerungsentzerrer (32, 33, 34), welcher an ein erstes lokales Netzwerk (22, 23) angeschlossen ist, zum Entzerren einer Übertragung von Datenpaketen, die mit mindestens einem von mindestens einem an ein zweites lokales Netzwerk (20), welches sich von dem ersten lokalen Netzwerk (22, 23) unterscheidet, angeschlossenen Anwendungsserver (40) bereitgestellten Dienst assoziiert sind, an mindestens zwei Anwendungs-Clients (51, 53, 54), welche an lokale Netzwerke (22, 23), die sich von dem zweiten lokalen Netzwerk (20) unterscheiden, angeschlossen sind, wobei der Verzögerungsentzerrer (32, 33, 34) eine Steuereinheit (82) umfasst, welche dazu ausgelegt Ist, eine zusätzliche Zeitverzögerung von einer Verzögerungssteuerung (30), welche an dasselbe zweite lokale Netzwerk (20) angeschlossen ist wie der mit dem Anwendungsserver (40) assoziierte Anwendungsserver (40), zu empfangen, wobei der Verzögerungsentzerrer (32, 33, 34) für einen entsprechenden Anwendungs-Client der besagten Anwendungs-Clients (51, 53, 54) bereitgestellt wird und innerhalb des Kommunikationspfads in der Nähe seines assoziierten Netwerkknotens, welcher den Anwendungsserver (51, 53, 54) bereitstellt und/oder ausführt, implementiert wird, wobei der entsprechende Anwendungs-Client an das erste lokale Netzwerk (22, 23) angeschlossen ist, und wobei eine Zeitverzögerung für zwischen dem Verzögerungsentzerrer (32, 33, 34) und seinem assoziierten Anwendungs-Client (51, 53, 54) ausgetauschte Datenpakete mindestens fünf Mal kleiner ist als eine entsprechende Zeitverzögerung, welche mit der Übertragung des Datenpakets zwischen dem Verzögerungsentzerrer (32, 33, 34) und der entsprechenden mit dem mindestens einen Anwendungsserver (40) assoziierten und in dem Kommunikationspfad zwischen einem Anwendungs-Client (51, 53, 54) und dem entsprechenden Anwendungsserver (40) angeordneten Verzögerungssteuerung (30) assoziiert ist, und die mit dem mindestens einen Dienst assoziierten Datenpakete gemäß der empfangenen zusätzlichen Zeitverzögerung zu planen.

## Revendications

1. Procédé d'égalisation du retard sur le réseau pour égaliser un transfert de paquets de données associés à au moins un service fourni par au moins un serveur d'application (40) connecté à un premier réseau local (20) à au moins deux clients d'application (51, 53, 54), selon lequel un contrôleur de latence (30) connecté au même réseau local (20) que l'au moins un serveur d'application (40) et associé à l'au moins un serveur d'application (40) est positionné dans le trajet de communication entre les clients d'application (51, 53, 54) connectés aux seconds réseaux locaux (22, 23) qui sont différents du premier réseau local (20) et du serveur d'application (40), et
le procédé comprenant les étapes suivantes :
fournir pour chacun desdits clients d'application (51, 53, 54) un égaliseur de latence (32, 33, 34) connecté au même réseau local (22, 23) que le client d'application respectif (51, 53, 54) desdits clients d'application (51, 53, 54), l'égaliseur de latence (32, 33, 34) étant mis en oeuvre dans le trajet de communication à proximité d'un noeud de réseau associé qui fournit et/ou exécute le client d'application (51, 53, 54) et un retard pour les paquets de données échangés entre l'égaliseur de latence (32, 33, 34) et son client d'application associé (51, 53, 54) étant au moins cinq fois inférieur au retard respectif associé au transfert du paquet de données entre l'égaliseur de latence (32, 33, 34) et le contrôleur de latence respectif (30),
mesurer, par le contrôleur de latence (30) associé audit au moins un serveur d'application (40), pour au moins deux desdits clients d'application (51, 53, 54) un retard respectif associé à un transfert d'un paquet de données entre ledit serveur d'application (40) et le client d'application respectif, un retard pour les paquets de données échangés entre le contrôleur de latence (30) et son serveur d'application associé (40) étant au moins cinq fois inférieur au retard respectif associé au transfert du paquet de données entre le contrôleur de latence (30) et l'égaliseur de latence respectif (32, 33, 34),
calculer, par le contrôleur de latence (30), pour chacun des au moins deux clients d'application (51, 53, 54) un retard supplémentaire respectif sur la base du retard respectif mesuré avec une contrainte que chaque somme respective du retard supplémentaire respectif et du retard respectif soit de dimension égale,
envoyer, par le contrôleur de latence (30), les retards supplémentaires respectifs aux égaliseurs de latence (32, 33, 34) associés aux clients d'application respectifs (51, 53, 54), et
ordonnancer, par chaque égaliseur de latence (32, 33, 34), les paquets de données associés à au moins un service selon le retard supplémentaire respectif reçu.

2. Procédé d'égalisation du retard sur le réseau selon la revendication 1, le procédé comprenant l'étape suivante :
transférer les paquets de données associés à l'au moins un service entre le serveur d'application (40) et au moins un des clients d'application (51, 53, 54) via un réseau de communication (10), l'égaliseur de latence (32, 33, 34) interconnectant son client d'application associé (51, 53, 54) au réseau de communication (10),

3. Procédé d'égalisation du retard sur la réseau selon la revendication 1, le procédé comprenant l'étape suivante :
instancier le serveur d'application (60) et au moins un des clients d'application (60) sur le même noeud de réseau, et transférer les paquets de données associés à l'au moins un service entre le serveur d'application (60) et ledit client d'application (60).

4. Procédé d'égalisation du retard sur le réseau selon la revendication 3, le procédé comprenant l'étape suivante ;
transférer les paquets de données associés à l'au moins un service entre le serveur d'application (60) et ledit client d'application (60) au moyen d'une communication inter processus.

5. Procédé d'égalisation du retard sur le réseau selon la revendication 1, selon lequel la mesure du retard respectif comprend les étapes suivantes :
surveiller, par l'égaliseur de latence (32, 33, 34), le transfert des paquets de données associés à l'au moins un service entre ledit serveur d'application (40) et
les clients d'application respectifs (51, 53, 54), affecter, par l'égaliseur de latence respectif (32, 33, 34) et/ou le client d'application respectif (51, 53, 54), une estampille temporelle à un ou plusieurs paquets de données avant de l'envoyer audit serveur d'application (40),
et
déterminer, par le contrôleur de latence (30), les retards respectifs au moyen desdites une ou plusieurs estampilles temporelles associées aux paquets de données.

6. Procédé d'égalisation du retard sur le réseau selon la revendication 1, selon lequel la mesure du retard respectif comprend les étapes suivantes :
délivrer, par le contrôleur de latence (30), un message de demande d'estampille temporelle à un ou plusieurs desdits égaliseurs de latence (32, 33, 34) associés aux clients d'application (51, 53, 54),
répondre, par l'un ou plusieurs desdits égaliseurs de latence (32, 33, 34), au message de demande d'estampille temporelle au moyen de l'envoi d'un message de réponse respectif au contrôleur de latence (30), le message de réponse respectif comprenant une estampille temporelle indiquant une valeur d'horloge locale de l'égaliseur de latence (32, 33, 34) associée à la réception du message de demande d'estampille temporelle, et
déterminer, par le contrôleur de latence (30), le retard respectif associé au transfert du paquet de données au moyen desdites une ou plusieurs estampilles temporelles reçues avec lesdits messages de réponse respectifs.

7. Procédé d'égalisation du retard sur le réseau selon la revendication 1, selon lequel la mesure du retard respectif comprend les étapes suivantes :
délivrer, par le contrôleur de latence (30), un message de demande de réponse à un ou plusieurs desdits égaliseurs de latence (32, 33, 34) associés aux clients d'application (51, 53, 54),
répondre, par l'un ou plusieurs desdits égaliseurs de latence (32, 33, 34), au message de demande de réponse au moyen de l'envoi d'un message de réponse respectif au contrôleur de latence (30), et
déterminer, par le contrôleur de latence (30), le retard respectif associé au transfert du paquet de données au moyen d'une valeur d'horloge locale associée à la délivrance du message de demande de réponse et d'une valeur d'horloge locale associée à une réception du message de réponse respectif, les valeurs d'horloge locales étant associées au contrôleur de latence (30).

8. Procédé d'égalisation du retard sur le réseau selon la revendication 1, le procédé comprenant les étapes suivantes :
déterminer, par le contrôleur de latence (30), un retard maximum à partir des retards respectifs mesurés, et
affecter, par le contrôleur de latence (30), pour chacun des clients d'application (51, 53, 54) une différence du retard maximum et du retard respectif associé au client d'application respectif (51, 53, 54) en tant que retard supplémentaire respectif.

9. Procédé d'égalisation du retard sur le réseau selon la revendication 1, selon lequel le contrôleur de latence (30) exécute l'étape de mesure deux ou plusieurs fois, calcule un retard moyen respectif en tant que retard respectif sur la base des retards respectifs mesurés une ou plusieurs fois et calcule un nouveau retard supplémentaire respectif pour les clients d'application (51, 53, 54) sur la base du retard moyen respectif.

10. Procédé d'égalisation du retard sur le réseau selon la revendication 9, selon lequel le contrôleur de latence (30) exécute l'étape de mesure deux ou plusieurs fois, de préférence périodiquement toutes les 10 secondes à 1 minute.

11. Procédé d'égalisation du retard sur le réseau selon la revendication 1, selon lequel le contrôleur de latence (30) exécute l'étape de mesure périodiquement, de préférence toutes les 10 secondes à 1 minute, et calcule périodiquement un nouveau retard supplémentaire respectif en tant que retard supplémentaire respectif sur la base du nouveau retard respectif,

12. Procédé d'égalisation du retard sur le réseau selon la revendication 1, le procédé comprenant les étapes suivantes :
affecter, par une passerelle de service de l'égaliseur de latence (70), ledit contrôleur de latence (30) audit serveur d'application (40) et lesdits égaliseurs de latence (32, 33, 34) auxdits clients d'application (51, 53, 54).

13. Procédé d'égalisation du retard sur le réseau selon la revendication 12, le procédé comprenant les étapes suivantes :
fournir, par la passerelle de service de l'égaliseur de latence (70), une interface de programmation de l'application de l'égaliseur de latence (72) permettant l'affectation dudit contrôleur de latence (30) et dudit égaliseur de latence (32, 33, 34), l'interface de programmation de l'application de l'égaliseur de latence (72) comprenant une fonctionnalité d'authentification pour accéder à l'au moins un service, une fonctionnalité d'autorisation pour accéder à la passerelle de service de l'égaliseur de latence (70), une fonctionnalité de comptabilisation pour l'utilisation de l'au moins un service, une fonctionnalité d'établissement de session et de fin de session pour une initiation de session et une fin de session, respectivement de l'au moins un service, et/ou une fonctionnalité de commande de l'au moins un service, et
conserver, par une base de données (71), les données en rapport avec l'au moins un service et les données en rapport avec ledit égaliseur de latence (32, 33, 34) et/ou ledit contrôleur de latence (30).

14. Contrôleur de latence (30) connecté à un premier réseau local (20) pour égaliser un transfert de paquets de données associés à au moins un service fourni par au moins un serveur d'application (40) connecté au même réseau local (20) que le contrôleur de latence (30) à au moins deux clients d'application (51, 53, 54) connectés aux seconds réseaux locaux (22, 23) qui sont différents du premier réseau local (20), le contrôleur de latence (30) comprenant une unité de commande (82) adaptée pour mesurer pour au moins deux desdits clients d'application (51, 53, 54) un retard respectif associé à un transfert d'un paquet de données entre le serveur d'application (40) et les clients d'application (51, 53, 54), le contrôleur de latence (30) associé à l'au moins un serveur d'application (40) étant positionné dans le trajet de communication entre un client d'application (51, 53, 54) et le serveur d'application respectif (40) et un retard pour les paquets de données échangés entre le contrôleur de latence (30) et son serveur d'application associé (40) étant au moins cinq fois inférieur au retard respectif associé au transfert du paquet de données entre le contrôleur de latence (30) et un égallseur de latence respectif (32, 33, 34) fourni pour le client d'application (51, 53, 54), connecté au même réseau local (22, 23) que le client d'application respectif (51, 53, 54) desdits clients d'application (51, 53, 54) et mis en oeuvre dans le trajet de communication à proximité d'un noeud de réseau associé qui fournit et/ou exécute le client d'application (51, 53, 54), pour calculer pour chacun des au moins deux clients d'application (51, 53, 54) un retard supplémentaire respectif sur la base du retard respectif mesuré avec une contrainte que chaque somme respective du retard supplémentaire respectif et du retard respectif soit de dimension égale, et pour envoyer les retards supplémentaires respectifs à l'égaliseur de latence (32, 33, 34) associé au client d'application respectif (51, 53, 54).

15. Égaliseur de latence (32, 33, 34) connecté à un premier réseau local (22, 23) pour égaliser un transfert de paquets de données associés à au moins un service fourni par au moins un serveur d'application (40) connecté à un second réseau local (20) qui est différent du premier réseau local (22, 23) à au moins deux clients d'application (51, 53, 54) connectés aux réseaux locaux (22, 23) qui sont différents du second réseau local (20), l'égaliseur de latence (32, 33, 34) comprenant une unité de commande (82) adaptée pour recevoir un retard supplémentaire d'un contrôleur de latence (30) connecté au même second réseau local (20) que le serveur d'application (40) associé au serveur d'application (40), l'égaliseur de latence (32, 33, 34) étant fourni pour un client d'application respectif desdits clients d'application (51, 53, 54) et mis en oeuvre dans le trajet de communication à proximité de son noeud de réseau associé qui fournit et/ou exécute le client d'application (51, 53, 54), le client d'application respectif étant connecté au premier réseau local (22, 23) et un retard pour les paquets de données échangés entre l'égaliseur de latence (32, 33, 34) et son client d'application associé (51, 53, 54) étant au moins cinq fois inférieur au retard respectif associé au transfert du paquet de données entre l'égaliseur de latence (32, 33, 34) et le contrôleur de latence respectif (30) associé à l'au moins un serveur d'application (40) et positionné dans le trajet de communication entre un client d'application (51, 53, 54) et le serveur d'application respectif (40), et pour ordonnancer les paquets de données associés à l'au moins un service selon le retard supplémentaire reçu.
